# EUROPEAN PATENT APPLICATION

(11) **EP 4 807 203 A1**
(43) Date of publication of application: **16.09.2026**
(21) Application number: 25163704.7
(22) Date of filing: 14.03.2025
(51) Int. Cl.: F16B 39/24, F16B 43/00

(54) **CONICAL WASHER WITH REDUCED WEIGHT AND IMPROVED PERFORMANCE**

(71) Applicant: Growermetal S.p.A., 23885 Calco (LC) (IT)
(72) Inventor: CATTANEO, Paolo, 23885 Calco (LC) (IT); STRANO, Matteo, 20156 Milan (IT); GORLA, Carlo, 20156 Milan (IT); BONAITI, Luca, 20156 Milan (IT); KAYA, Ertugrul, 20156 Milan (IT)
(74) Representative: Kador & Partner Part mbB

(57) **Abstract**

The present invention relates to a washer (10a-c), in particular a spring washer for a screw connection, having a central hole (3), a peripheral edge (6), a first surface (1) and a second surface (4) arranged opposite the first surface (1), wherein the first and the second surface (1, 4) extend from the central hole (3) to the peripheral edge (6) and are inclined to a plane of the washer (10a-c), and wherein an annular region of the first surface (1) arranged closer to the central hole (3) than to the peripheral edge (6) has a curvature (2a).

## Description

The present invention relates to a washer, in particular a spring washer for a screw connection.

To mitigate the detrimental effects of vibrations, settlement, and heat and prevent loosening, fastening elements with locking mechanisms, thread-locking adhesives, or safety washers are employed. These specialized fastening elements play a crucial role in preventing rattling, minimizing vibrations, and preserving clamping forces by maintaining a residual force. Among them the safety washers, such as conical spring washers, are a cheap and efficient method to prevent loosening of fastening elements.

Conical spring washers, for example according to DIN 6796 standard or DIN 6908 standard for screw and washer preassembling (sems), are known in the art and are used, for example, in various types of screw connections in mechanical, hydraulic and electrical applications. The conical shape of the washer provides a spring force that helps to keep a preload on the screw connection.

The technical problem underlying the invention is to provide a washer, in particular a spring washer, having improved properties compared to those known from the art.

This problem is solved by the invention according to the independent claims. Further preferred developments are described by the dependent claims.

The present invention provides a washer, in particular a spring washer for a screw connection, also designated as "bolted joint", which, compared to known conical spring washers according to DIN 6796, offers a lower weight and improved performance in terms of residual force and residual deformation. Preferably, the washer is made of steel, in particular C60 steel having a hardness range between 400 HV and 490 HV after heat treatment of quenching and tempering.

The present invention further concerns a screw connection that comprises a screw, a nut and the washer in any one of the examples as described herein.

The washer has a central hole, a peripheral edge, a first surface (also designated as "top side" or "top surface), and a second surface (also designated "lower side" or "bottom surface") arranged opposite the first surface.

The terms "upper", "lower", "top" or "bottom" as used herein refer to a cross-sectional view of the washer at the bottom, as shown in the figures.

As the washer is rotationally symmetrical, the dimensional statements, such as with regard to diameters, given herein also refer to a cross-sectional view of the washer.

The central hole of the washer is configured to receive a shank of a screw, A diameter of the central hole may define an inner circumference of the washer, and a diameter of the peripheral edge of the washer may define an outer circumference thereof.

The first and second surfaces of the washer extend from the central hole to the peripheral edge and are inclined to a plane of the washer. The plane of the washer, or washer plane, is a plane in which the outer circumference of the washer is contained. It is usually parallel to a workpiece and/or bolt under-head/nut surface the washer is engaged with. The first and the second surface may be inclined to the washer plane by an angle in a range between 3° and 15°, such as between 4° to 12°, 4° to 10°, or 5° to 9°. Thus, when engaged, the first surface of the washer engages the workpiece and/or bolt under-head/nut first at or close to its central hole.

As a result of the inclination of the first and second surfaces to the washer plane, a height of the washer is usually larger than a thickness thereof. The height of the washer may be understood as an extension of the washer in a vertical direction from a lowest point of the second surface to a highest point of the first surface. The thickness of the washer may be understood as a minimum extension of the washer in direction perpendicular to a washer surface, i.e. its extension from the first to the second surface.

Furthermore, an annular region of the first surface arranged closer to the central hole than to the peripheral edge has a curvature. In other words, the inclination of the first surface does usually not extend in a straight line from the central hole to the peripheral edge but is partially curved. The curvature may, for example, directly adjoin the central hole or may be arranged at a certain distance therefrom. Preferably the curvature may be arranged adjacent to the central hole.

According to an example, the curvature may be a convex curvature. In other words, the first surface may bulge outward in the annular region of the curvature.

Due to the inclination of the washer, a load applied thereto, e.g. when tightening a screw connection, initially acts on the top surface at the inner circumference and on the bottom surface at the outer circumference. As a result of the convex curvature next to the inner circumference on the top surface, the washer tilts as the load increases, causing the respective load application points on the top and bottom surfaces to move towards each other and the stiffness of the washer to increase as it is compressed.

In a preferred embodiment, the ratio between the radius of the curvature and the diameter of the central hole may be in a range between 0.2 to 3, more preferably between 0.5 and 2.5, still more preferably between 0.7 and 2.0, and most preferably between 0.8 and 1.5. For example, the inner diameter of an M12 washer is usually 13 mm, so that the, if the curvature radius is 16.25 mm a ratio between the radius of the curvature and the diameter of the central hole of 1.25 would result.

In a further preferred embodiment, the ratio between the radius of the curvature and the diameter of peripheral edge of the washer may be in a range between 0.1 to 2, more preferably between 0.2 and 1.5, and most preferably between 0.3 and 1.25, and most preferably between 0.4 and 1.0. For example, the diameter of peripheral edge of an M12 washer is usually 24 mm, so that the, if the curvature radius is 18 mm a ratio between the radius of the curvature and the diameter of the central hole of 0.75 would result.

In this context, a larger radius leads to a larger tilt, which in turn results in a smaller distance between the load application points and thus a higher stiffness. As a fast increase in stiffness during a compression, prevents a deflection of the washer, the radius of the curvature may be selected depending on the intended use. For example, a washer used for highly stressed load bearing applications may have a radius at the upper end of the range while a washer for an application requiring higher deflection may have a radius at the lower end of the range.

According to an example, an annular region of the first surface arranged between the curvature and the peripheral edge of the washer may have a conical shape. In other words, the annular region described may be parallel to a cone with its axis going through a center of the washer. The base of the cone is parallel to the washer plane, and the (theoretical) top of the cone is closer to the first than to the second surface of the washer. This means that in a region between an end of the curvature and the outer circumference of the washer, its inclined first surface extends in a straight line outwards. A width and cone angle of the conical shaped region may depend on the radius of the curvature. The larger the curvature radius, the wider the conical shaped region and the smaller the cone angle. The latter results from the fact that the conical region connects to an end of the curvature that lies deeper at a larger radius.

According to an alternative example a first curvature and a second curvature may be formed on the first surface of the washer. In particular, the second curvature may be arranged adjacent to the first curvature, i.e. a course of the first surface may pass from the first curvature into the second curvature. In other words, instead of a conical shaped annular region a second curvature may be arranged between the first curvature and the peripheral edge of the washer. The first curvature may again directly adjoin the central hole or may be arranged at a certain distance therefrom. Preferably the first curvature may be arranged adjacent to the central hole.

In a preferred embodiment of this alternative example the ratio between the radius of the first curvature and the diameter of the central hole may be in a range between 0.2 to 3, more preferably between 0.5 and 2.5, still more preferably between 0.7 and 2.0, and most preferably between 0.8 and 1.5.

It is furthermore preferred in this alternative example that ratio between the radius of the first curvature and the diameter of peripheral edge of the washer may be in a range between 0.1 to 2, more preferably between 0.2 and 1.5, and most preferably between 0.3 and 1.25, and most preferably between 0.4 and 1.0.

In a further preferred embodiment of this alternative example, the ratio between the radius of the second curvature and the diameter of the central hole may be in a range between 0.3 to 2.0, more preferably between 0.5 and 1.5, and most preferably between 0.7 and 1.0.

In still a further preferred embodiment of this alternative example, the ratio between the radius of the second curvature and the diameter of peripheral edge of the washer may be in a range between 0.1 to 1.0, more preferably between 0.2 and 0.8, and most preferably between 0.3 and 0.6.

In a preferred example, the first curvature may be a convex curvature, and the second curvature may be a concave curvature having a turning point in between. In this way, the first surface of the washer provides a sigmoidal shape.

Preferably, the first and the second surfaces may be parallel to each other. In this case, the bottom surface of the washer may extend in the same curved manner as its top surface from the central hole to the peripheral edge. This facilitates the fabrication of the washer, as it can easily be formed from a conventional conical washer by means of appropriate bending processes. In particular, a parallel sigmoidal shape of the top and bottom surfaces of the washer may be implemented, which can be used to adjust the load distribution during a compression. As the top and bottom surfaces are arranged on the washer facing away from each other, to realize a parallel sigmoidal shape on both surfaces, a concave first curvature may be formed on the bottom surface in parallel to the convex first curvature on the top surface, and a convex second curvature may be formed on the bottom surface in parallel to the concave second curvature on the top surface.

At the beginning of the compression, the convex first curvature on the top surface and the convex second curvature on the bottom surface induces a tilting action of the washer causing the load application points to gradually move inwards along the respective curvatures. The sigmoidal shape of both surfaces causes the load to be distributed over a larger area, minimizing the risk of indentations on the bearing surface and maintaining its structural integrity.

In this context, the first curvature may have the same radius as the second curvature resulting in a smooth and progressive increase in stiffness during compression and a uniform load distribution. It is also possible to select different radii of the two curvatures on the top and bottom surfaces of the washer based on a desired load distribution during compression.

According to a further example, an annular region of the second surface of the washer adjacent to its peripheral edge (outer circumference) may be parallel to the washer plane. In the case of a parallel sigmoidal shape of the top and bottom surfaces of the washer, the annular region parallel to the washer plane may extend from the second curvature on the bottom surface of the washer to the outer circumference thereof.

During the flattening of the washer while it is tightened, the washer slides more gently onto the bearing surface due to the annular region parallel to the washer plane and hence usually also parallel to a bearing surface. Thus, the risk of indentations on the bearing surface can be further reduced.

According to an example, a ratio between an initial height and the thickness of the washer may be in a range between 1.0 and 1.75, such as between 1.34 and 1.40, and a ratio between a residual spring force and a clamping force of the washer may be ≥ 0.50, such as ≥ 0.65.

The "initial" height of the washer shall be the height of the washer in delivery condition before assembly in a screw connection.

For example, a conventional conical washer for a screw with a nominal bolt diameter of 12 mm according to DIN 6796 usually has an initial height of about 3.9 mm and a thickness of 3 mm resulting in a height-to-thickness ratio of 1.32. By transferring a height-to-thickness ratio between 1.35 and 1.40 to the 12 mm washer according to DIN 6796, an initial height between 3.22 mm and 3.28 mm and a thickness between 2.34 mm and 2.40 mm can be achieved. This means that the thickness of the washer can be significantly reduced, while its initial deflection (difference between initial height and thickness of the washer) is similar to that of the conventional conical washer.

The ratio between the residual spring force and the clamping force may be determined according to DIN 276-26, which requires that a washer with a nominal bolt diameter of 12 mm, after exposure to a clamping force of 43 kN, must still have a residual spring force of 18 kN. This leads to a ratio between the residual spring force and the clamping force of 0,42. In turn, a ratio between these forces of 0.65 means that the residual spring force of the washer after loading with 43 kN is still 28 kN and thus 55% higher than required.

As mentioned above, a conventional conical washer for a screw with a nominal bolt diameter of 12 mm according to DIN 6796 has a thickness of 3 mm to meet the requirements for residual spring force according to DIN 276-26, while the presented washer only has a thickness in the range of 2.34 mm and 2.40 mm. This means that the geometry of the presented washer allows a significantly reduced thickness while providing a higher residual spring force. As a result, a weight of the washer can be reduced by about 20% without any loss of performance.

### Brief description of the figures

Fig. 1 shows a conventional conical washer having a geometry according to DIN 6796 in an enlarged cross-sectional view.
Fig. 2 shows a washer according to a first example of the present invention in an enlarged cross-sectional view.
Fig. 3 shows a washer according to a second example of the present invention in an enlarged cross-sectional view.
Fig. 4 shows a washer according to a third example of the present invention in an enlarged cross-sectional view.
Fig. 5a to 5d show schematically load application points on the washers 10', 10a to 10c shown in Figs. 1 to 4 at a beginning and during a compression of the washers 10', 10a to 10c.
Fig. 6a and 6b show residual force and residual deflection of the washers shown in Figs. 1 to 4 after a compression according to DIN 276-26.

### Examples

In the following, examples of the present invention are described in detail with reference to exemplary figures. In the figures, identical or similar elements are provided with identical reference signs, so that a repeated description of the elements is omitted unless this is necessary.

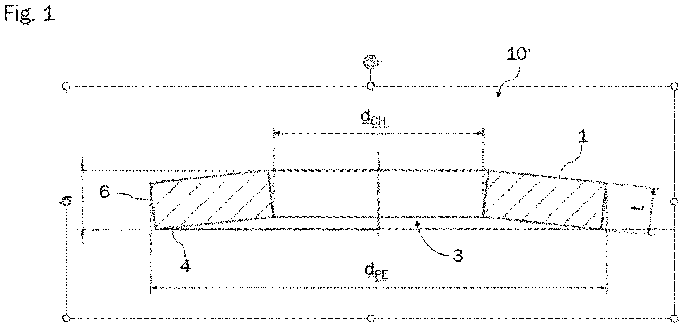

Fig. 1 shows a conventional conical washer 10' having a geometry according to DIN 6796 in an enlarged cross-sectional view. The washer 10' has a central hole 3, a peripheral edge 6, a top surface 1 (first surface 1) and a bottom surface 4 (second surface 4) arranged opposite the first surface.

The cross-sectional view reveals the conical shape of the washer 10' which is defined in that the first and second surfaces 1, 4 run parallel to a cone whose axis goes through the center of the washer 10'. Due to its conical shape, the height h of the washer 10' is larger than its thickness t. Furthermore, a diameter of the central hole 3 at the top surface 1 is larger than a diameter of the central hole 3 at the bottom surface 4, wherein the latter defines the inner diameter d_{CH} of the washer 10'. Accordingly, an outer diameter of the top surface 1, defining the outer diameter d_{PE} of the washer 10', is larger than an outer diameter of the bottom surface 4.

In the present case, the conical washer 10' is a washer for a screw (not depicted) with a nominal bolt diameter of 12 mm having an inner diameter d_{CH} of 13.20 mm, an outer diameter d_{PE} of 28.76 mm, an initial height h of 3.84 mm and a thickness t of 3.01 mm. Thus the initial deflection of the conical washer 10' is 0.83 mm.

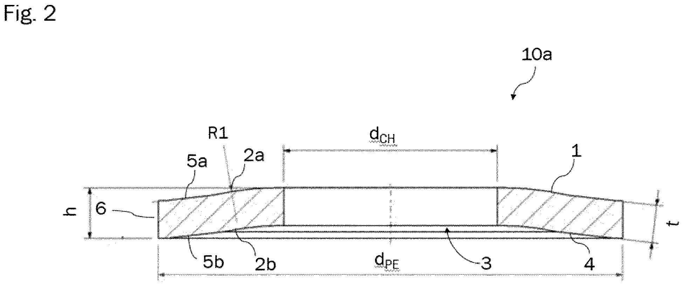

Fig. 2 shows a washer 10a according to a first example of the present invention in an enlarged cross-sectional view. The washer 10a has nearly the same inner and outer diameters d_{CH}, d_{PE} as the conventional conical washer 10' shown in Fig. 1 (d_{CH} = 13.30 mm, d_{PE} = 28.74 mm) and also a similar initial deflection of 0.86 mm. However, the thickness t of the washer 10a is only t = 2.39 mm, resulting in an initial height of h = 3.25 mm. The reduced thickness t leads to a weight reduction by about 20% for the washer 10a compared to the conventional conical washer 10'.

The washer 10a further differs from the washer 10' shown in Fig. 1 by a convex curvature 2a having a radius R1 arranged on the top surface 1 of the washer 10a in an annual region adjacent to the central hole 3. In the present case, the top surface 1 and the bottom surface 4 run parallel to each other so that the bottom surface 4 shows a concave curvature 2b also having the radius R1. The curvatures 2a, 2b connect to the central hole 3 in such a way that a diameter thereof (inner diameter d_{CH}) is the same at the top and bottom surfaces 1, 4 of the washer 10a. A region 5a on the top surface 1 and a region 5b on the bottom surface 4 of the washer 10a, each arranged between the curvatures 2a, 2b and the peripheral edge 6, have a conical shape similar to that of the conical washer 10'. In the following a washer 10a to 10c having a curvature according to the Figs. 2 to 4 is also designated as "curved washer" 10a to 10c.

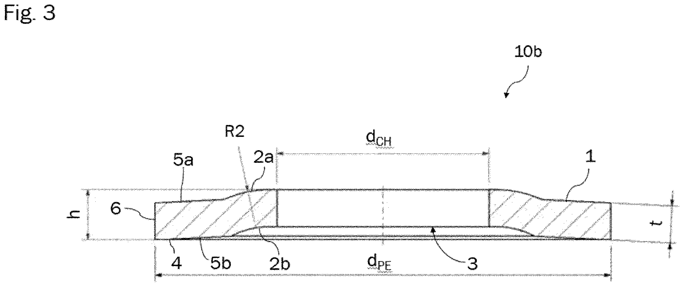

Fig. 3 shows a washer 10b according to a second example of the present invention in an enlarged cross-sectional view. The curved washer 10b has almost the same geometric dimensions as the washer 10a, namely an inner diameter d_{CH} of 13.31 mm, an outer diameter d_{PE} of 28.74 mm, an initial height h of 3.27 mm and a thickness t of 2.39 mm, the two latter values giving an initial deflection of 0.88 mm. A difference between the present washer 10b and the washer 10a shown in Fig. 1 is the radius R2 of the curvatures 2a, 2b, which is smaller than the radius R1 of the curvatures 2a, 2b with which the washer 10a is provided. The smaller radius R2 leads to more pronounced curvatures 2a, 2b on the top and bottom surfaces 1, 4 of the washer 10b. As a result, the conical shaped regions 5a, 5b between the curvatures 2a, 2b and the peripheral edge 6 are wider than that of the washer 10a and have a smaller cone angle.

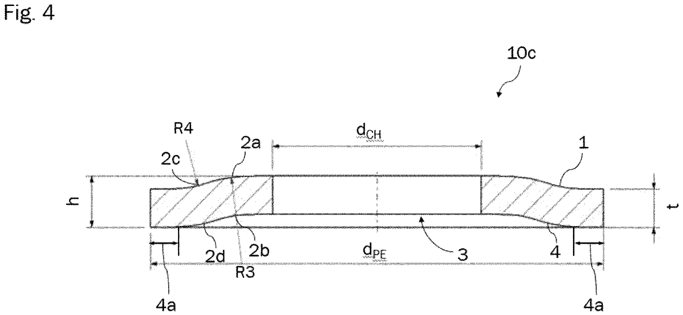

Fig. 4 shows a washer according to a third example of the present invention in an enlarged cross-sectional view. The curved washer 10c has almost the same geometric dimensions as the washers 10a and 10b, namely an inner diameter d_{CH} of 13.50 mm, an outer diameter d_{PE} of 28.73 mm, an initial height h of 3.23 mm and a thickness t of 2.36 mm, the two latter values giving an initial deflection of 0.87 mm.

The characteristic dimensions of the washers 10', 10a to 10c depicted in Figs. 1 to 4 are summarized in the following Table 1.

**Table 1**

| **Characteristic** | **10'** | **10a** | **10b** | **10c** |
|---|---|---|---|---|
| Weight (g) | 11.62 | 9.34 | 9.33 | 9.16 |
| Initial Height h (mm) | 3.84 | 3.25 | 3.27 | 3.23 |
| Thickness t (mm) | 3.01 | 2.39 | 2.39 | 2.36 |
| Initial Deflection (mm) | 0.83 | 0.86 | 0.88 | 0.87 |
| Inner Diameter d_{CH} (mm) | 13.20 | 13.30 | 13.31 | 13.50 |
| Outer Diameter d_{PE} (mm) | 28.76 | 28.74 | 28.75 | 28.73 |

The washer 10c differs from the previously shown curved washers 10a, 10b by having a first curvature 2a, 2b and a second curvature 2c, 2d on its top and bottom surfaces 1, 4. The first and second curvatures 2a, 2b and 2c, 2d are arranged in succession on the respective surfaces 1, 4, with the first curvatures 2a, 2b connecting to the central hole 3, similar to the curvatures 2a, 2b show in Figs. 2 and 3. According to the present example, the first curvature 2a on the top surface 1 of the washer 10c has a convex shape with a radius R3, and the second curvature 2c on the top surface of the washer 10c has a concave shape with a radius R4. In the depicted example, the radius R3 of the first curvature 2a is equal to the radius R4 of the second curvature 2c. Just like the previous curved washers 10a, 10b, the top and bottom surfaces 1, 4 of the present washer 10c are parallel to each other, and face away from each other. Thus, the first curvature 2b on the bottom surface 4 of the washer 10c has a concave shape with the radius R3 and the second curvature 2d on the bottom surface 4 of the washer 10c has a convex shape with a radius R4 equal to R3. This leads to a parallel sigmoidal shape of the top and bottom surfaces 1, 4 of the washer 10c, which can be used to adjust a load distribution during tightening of a screw connection (not depicted) as will be explained hereinafter.

Additionally, the washer 10c has an annular region 4a on its bottom surface 4 adjacent to its peripheral edge 6 being arranged parallel to a plane of the washer. In particular, the annular region 4a parallel to the washer plane extends from the second curvature 2d on the bottom surface 4 of the washer 10c to the outer circumference thereof. The annular region 4a allows for a smooth sliding of the washer 10c onto a bearing surface while it is flattened during tightening of the screw connection.

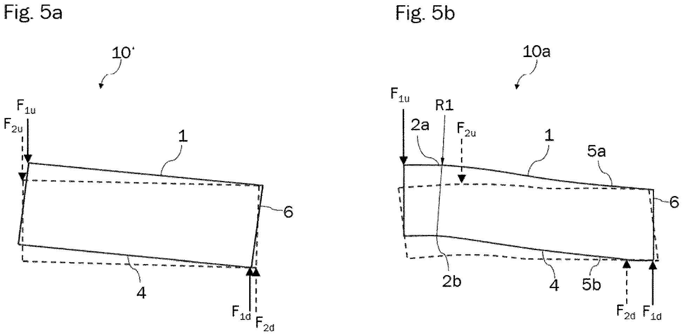

Fig. 5a to 5d show schematically load application points on the washers 10', 10a to 10c shown in Figs. 1 to 4 at a beginning and during a compression of the washers 10', 10a to 10c.

In particular, Figs. 5a to 5d show, respectively, a right portion of cross-sectional profiles of the washers 10', 10a to 10c as shown in Figures 1 to 4 prior to deformation by compression, and at a certain point during compression. The deformation at the certain point during compression may be determined, e.g., in the course of a residual elastic force measurements according to a testing procedure outlined in DIN 6796 and DIN 276-26. In each figure, the cross-sectional profiles of the washer portions before deformation are shown as a solid line and during compression as a dashed line. The load application points on the two surfaces of the washers 10', 10a to 10c at these times are indicated by the corresponding arrows (solid arrow = load application point at the beginning of compression, dashed arrow = load application point during compression).

In Fig. 5a a right portion of the cross-sectional profile of the conventional conical washer 10' is shown. With this washer 10', the load application points F₁ᵤ, F_{1d} (solid arrows) at the beginning of the compression are closer together as the load application points F₂ᵤ, F_{2d} (dashed arrows) at the certain point during the compression. In other words, the load application points F₁ᵤ, F_{1d} shift outward when the compression begins, increasing the distance therebetween. Therefore, a distance between the load application points F₂ᵤ, F_{2d} is larger than a distance between the load application points F₁ᵤ, F_{1d}.

Due to this behavior, a load-deflection curve for a conical washer 10' according to Fig. 1 shows a higher stiffness in the early stage of compression. As compression progresses, the curve transitions to a more flexible region due to the increase in distance between the load application points F₂ᵤ, F_{2d}.

Fig. 5b shows a right portion of the cross-sectional profile of the curved washer 10a according to Fig. 2 having a curvature 2a, 2b on the top and bottom surfaces 1, 4 with the radius R1. With this washer 10a, the load application points F₁ᵤ, F_{1d} (solid arrows) are initially farther apart. In particular the load application point F₁ᵤ on the top surface 1 is located at the inner circumference of the washer 10a, and the load application point F_{1d} on the bottom surface 4 is located at the outer circumference. As the compression begins, the convex curvature 2a on the top surface 1 causes the washer 10a to tilt so that both load application points F₁ᵤ, F_{1d} are inwardly moved on the respective surface. Thus, a distance between the load application points F₂ᵤ, F_{2d} (dashed arrows) at the certain point during the compression is shorter than a distance between the initial load application points F₁ᵤ, F_{1d}. As a result, the curved washer 10a shows a lower stiffness in the early stage of compression which increases continuously during the course of compression. This behaviour makes the washer 10a appropriate for a load bearing application requiring a certain deflection and an increased stiffness during compression compared to a conventional conical washer 10'.

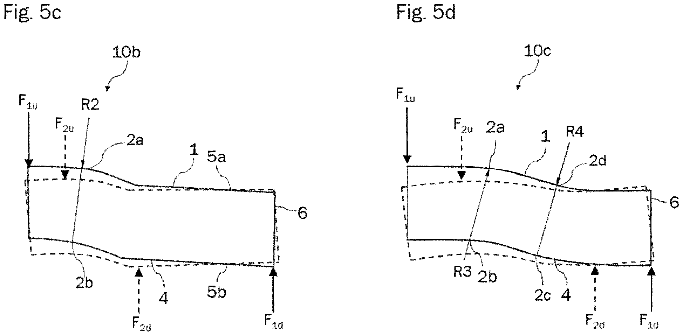

Fig. 5c shows a right portion of the cross-sectional profile of the curved washer 10b according to Fig. 3 having the curvatures 2a, 2b on the top and bottom surfaces 1, 4 with the radius R2 smaller than the radius R1 leading to a more pronounced curvature. Similar to Fig. 5b, the load application points F₁ᵤ, F_{1d} (solid arrows) at the top and bottom surfaces 1, 4 of the washer 10b are initially farther apart, namely at the inner and outer circumference of the washer 10b. As the compression begins, the pronounced convex curvature 2b with the Radius R2 on the top surface 1 of the washer 10b causes it to tilt further than the washer 10a shown in Fig. 5b. As a result, both load application points F₁ᵤ, F_{1d} are inwardly moved on the respective surface, with the load application point F₁ᵤ on the lower surface 4 being shifted inwards so far that the load application point F₂ᵤ comes to rest at an end of the curvature 2b. Thus, a distance between the load application points F₂ᵤ, F_{2d} (dashed arrows) at the certain point during the compression is much shorter than a distance between the initial load application points F₁ᵤ, F_{1d}. As a result, the curved washer 10a shows a lower stiffness in the early stage of compression which increases rapidly during the course of compression. This behaviour makes the washer 10a appropriate for a highly stressed load bearing application.

In Fig. 5d a right portion of the cross-sectional profile of the sigmoidal curved washer 10c according to Fig. 4 is shown, having the first and second curvatures 2a, 2b and 2c, 2d on the top and bottom surfaces 1, 4 with the radii R3 and R4.

Similar to Figs. 5b and 5c, the load application points F₁ᵤ, F_{1d} (solid arrows) at the top and bottom surfaces 1, 4 of the washer 10c are initially farther apart, namely at the inner and outer circumference thereof. As compression begins, the convex first curvature 2a on the top surface 1 and the convex second curvature 2d on the bottom surface 4 induces a tilting action of the washer 10c causing the load application points F₁ᵤ, F_{1d} to gradually move inwards along the respective curvatures. Thus, a distance between the load application points F₂ᵤ, F_{2d} (dashed arrows) at the certain point during the compression is shorter than a distance between the initial load application points F₁ᵤ, F_{1d}. In particular, the distance between the load application points F₂ᵤ, F_{2d} of the washer 10c is similar to that of the washer 10a and significantly larger than that of the washer 10b. The sigmoidal shape of the top and bottom surfaces 1, 4 causes the load to be distributed over a larger area, minimizing the risk of indentations on a bearing surface and maintaining its structural integrity. This behaviour makes the washer 10c suitable for applications requiring controlled load distribution and gradual stiffness changes, ensuring reliable and efficient performance.

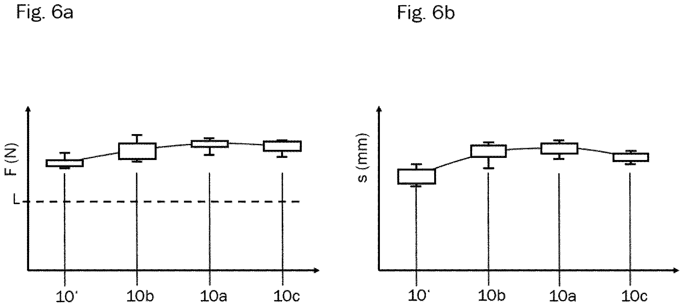

Fig. 6a and 6b show residual force and residual deflection of the washers shown in Figs. 1 to 4 after a compression according to DIN 276-26.

To conduct a defined compression of the washers 10', 10a to 10c, residual elasticity force measurements were carried out on 20 washers of each type using an MTS Alliance RF/100 high performance electromechanical load frame equipped with 643 compression platens in accordance with a test procedure described in DIN 6796 and DIN 276-26.

In this context, a load of 43 kN, specified in DIN 276-26 for the washers 10', 10a to 10d was applied incrementally to a washer 10', 10a to 10d to be tested. The loading plates moved gradually toward the washer 10', 10a to 10d until the required load was achieved and then held for two minutes to evaluate the material's response under sustained loading before an unloading phase followed. Residual force was measured at 0.02 mm from the maximum deflection point of the washer.

In Fig. 6a the measured residual forces for each type of washer 10', 10a, 10b, 10c are depicted in a box-and-whisker plot, showing an interquartile range (including the median) and a range of the 20 measured values, with individual data points for outliers. The x-axis represents the different washer types in the order 10', 10b, 10a, 10d, and the y-axis shows the corresponding residual force values. Additionally, a minimum residual force L, specified at 18 kN by DIN 267-26 is marked as a dashed line.

As can be seen from Figure 6a, all of the tested washers 10', 10b, 10a, 10d exceed the residual force L set by the DIN standard. Among the tested washers 10', 10b, 10a, 10d, the curved washer 10a has the highest performance based on the median, followed by the sigmoidal curved washer 10c. It is noticeable that the curved washer 10b shows more variation compared to the other washer types 10' 10a, 10d, which may result from the rapid increase in stiffness during compression.

Fig. 6b illustrates the residual deflection measured at each washer 10', 10a, 10b, 10c after a compression as described above. In this case the curved washer 10a also shows the best performance, namely the highest residual deflection based on the median followed by the curved washer 10b and the sigmoidal curved washer 10c.

In particular, it becomes clear from the results shown in Figs. 6a and 6b that the presented curved washers 10a to 10c perform better in terms of residual force and residual deflection than the conventional conical washer 10'. This is particularly remarkable as the curved washers 10a to 10c are significantly thinner and lighter than the conventional conical washer 10' (cf. Table 1 above). Thus, the presented curved geometries of the washers 10a to 10 c are suitable for improving a stiffness of a washer according to DIN 6796 while reducing its weight at the same time.

### Reference sign list

- 1:: first surface, top surface
- 2a to 2d:: curvature
- 3:: central hole
- 4:: second surface, bottom surface
- 5a, 5b: conical shaped regions
- 6:: peripheral edge
- 10',10a to 10c:: washer

## Claims

1. A washer (10a-c), in particular a spring washer for a screw connection, having a central hole (3), a peripheral edge (6), a first surface (1) and a second surface (4) arranged opposite the first surface (1), wherein
the first and the second surface (1, 4) extend from the central hole (3) to the peripheral edge (6) and are inclined to a plane of the washer (10a-c), and wherein
an annular region of the first surface (1) arranged closer to the central hole (3) than to the peripheral edge (6) has a curvature (2a).

2. The washer (10a-c) according to claim 1, wherein the curvature (2a) is a convex curvature.

3. The washer (10a-c) according to claim 1 or 2, wherein the ratio between the radius (R1, R2) of the curvature (2a) and the diameter of the central hole is in a range between 0.2 to 3, more preferably between 0.5 and 2.5, still more preferably between 0.7 and 2.0, and most preferably between 0.8 and 1.5.

4. The washer (10a-c) according to any one of the preceding claims, wherein an annular region (5a) of the first surface (1) arranged between the curvature (2a-d) and the peripheral edge (6) of the washer (10a-c) has a conical shape.

5. The washer (10a-c) according to any one of the claims 1 to 3, wherein a first curvature (2a) and a second curvature (2c) are formed on the first surface (1).

6. The washer (10a-c) according to claim 5, wherein the ratio between the radius (R4) of the second curvature (2c) and the diameter of the central hole is in a range between 0.3 to 2.0, more preferably between 0.5 and 1.5, and most preferably between 0.7 and 1.0.

7. The washer (10a-c) according to claim 5 or 6, wherein the first curvature (2a) is a convex curvature, and the second curvature (2c) is a concave curvature.

8. The washer (10a-c) according to any one of claims 5 to 7wherein the second curvature (2c) is arranged adjacent to the first curvature (2a).

9. The washer (10a-c) according to any one of the claims 5 to 8, wherein the first curvature (2a) has the same radius (R3, R4) as the second curvature (2c).

10. The washer (10a-c) according to any one of the preceding claims, wherein the first and the second surfaces (1, 4) are parallel to each other.

11. The washer (10a-c) according to any one of the preceding claims, wherein an annular region (4a) of the second surface (4) of the washer (10a-c) adjacent to the peripheral edge (6) is parallel to the plane of the washer (10a-c).

12. The washer (10a-c) according to any one of the preceding claims, wherein a ratio between an initial height (h) and a thickness (t) of the washer (10a-c) is in a range between 1.0 and 1.75, preferably between 1.34 and 1.40, and/or a ratio between a residual spring force and a clamping force of the washer (10a-c) is ≥ 0.50, preferably ≥ 0.65.

13. The washer (10a-c) according to any one of the preceding claims, wherein the washer (10a-c) is made of steel, in particular C60 steel, having a hardness range between 400 HV and 490 HV.

14. Screw connection comprising a screw, a nut and a washer (10a-c) according to any one of the proceeding claims.

15. Use of a washer (10a-c) according to any one of the claims 1 to 13 in a screw connection.

## Amended claims

### Amended claims in accordance with Rule 137(2) EPC.

1. A washer (10a-c), in particular a spring washer for a screw connection, having a central hole (3), a peripheral edge (6), a first surface (1) and a second surface (4) arranged opposite the first surface (1), wherein
the first and the second surface (1, 4) extend from the central hole (3) to the peripheral edge (6) and are inclined to a plane of the washer (10a-c), wherein
an annular region of the first surface (1) arranged closer to the central hole (3) than to the peripheral edge (6) has a curvature (2a), and wherein the first surface (1) and the second surface (4) of the washer (10a-c) are parallel to each other.

2. The washer (10a-c) according to claim 1, wherein the curvature (2a) is a convex curvature.

3. The washer (10a-c) according to claim 1 or 2, wherein the ratio between the radius (R1, R2) of the curvature (2a) and the diameter of the central hole is in a range between 0.2 to 3, more preferably between 0.5 and 2.5, still more preferably between 0.7 and 2.0, and most preferably between 0.8 and 1.5.

4. The washer (10a-c) according to any one of the preceding claims, wherein an annular region (5a) of the first surface (1) arranged between the curvature (2a-d) and the peripheral edge (6) of the washer (10a-c) has a conical shape.

5. The washer (10a-c) according to any one of the claims 1 to 3, wherein a first curvature (2a) and a second curvature (2c) are formed on the first surface (1).

6. The washer (10a-c) according to claim 5, wherein the ratio between the radius (R4) of the first curvature (2a) and the diameter of the central hole is in a range between 0.2 to 3, more preferably between 0.5 and 2.5, still more preferably between 0.7 and 2.0, and most preferably between 0.8 and 1.5 and/or wherein the ratio between the second curvature (2c) and the diameter of the central hole is in a range between 0.3 to 2.0, more preferably between 0.5 and 1.5, and most preferably between 0.7 and 1.0.

7. The washer (10a-c) according to claim 5 or 6, wherein the first curvature (2a) is a convex curvature, and the second curvature (2c) is a concave curvature.

8. The washer (10a-c) according to any one of claims 5 to 7wherein the second curvature (2c) is arranged adjacent to the first curvature (2a).

9. The washer (10a-c) according to any one of the claims 5 to 8, wherein the first curvature (2a) has the same radius (R3, R4) as the second curvature (2c).

10. The washer (10a-c) according to any one of the preceding claims, wherein the first and the second surfaces (1, 4) are parallel to each other.

11. The washer (10a-c) according to any one of the preceding claims, wherein an annular region (4a) of the second surface (4) of the washer (10a-c) adjacent to the peripheral edge (6) is parallel to the plane of the washer (10a-c).

12. The washer (10a-c) according to any one of the preceding claims, wherein a ratio between an initial height (h) and a thickness (t) of the washer (10a-c) is in a range between 1.0 and 1.75, preferably between 1.34 and 1.40, and/or a ratio between a residual spring force and a clamping force of the washer (10a-c) is ≥ 0.50, preferably ≥ 0.65.

13. The washer (10a-c) according to any one of the preceding claims, wherein the washer (10a-c) is made of steel, in particular C60 steel, having a hardness range between 400 HV and 490 HV.

14. Screw connection comprising a screw, a nut and a washer (10a-c) according to any one of the proceeding claims.

15. Use of a washer (10a-c) according to any one of the claims 1 to 13 in a screw connection.
